# FASCICULE DE BREVET EUROPEEN

(11) **EP 2 605 948 B1**
(45) Date de publication et mention de la délivrance du brevet: **11.06.2014**
(21) Numéro de dépôt: 11743117.1
(22) Date de dépôt: 13.07.2011
(51) Int. Cl.: B62D 5/04, B62D 6/10

(54) **SÉCURISATION DU COUPLE D'ASSISTANCE PAR UN ESTIMATEUR D'EFFORT SUR LA CRÉMAILLÈRE**
SICHERUNG DES UNTERSTÜTZUNGSDREHMOMENTS ANHAND EINES SCHÄTZERS DER KRAFTEINWIRKUNG AUF DIE ZAHNSTANGE
SECURING THE ASSISTANCE TORQUE BY MEANS OF AN ESTIMATOR OF THE FORCE ON THE RACK

(30) Priorité: 20.08.2010 FR 1056691
(43) Date de publication de la demande: 26.06.2013
(73) Titulaire: JTEKT Europe, 69540 Irigny (FR)
(72) Inventeur: DELARCHE, Jocelyn, F-69100 Villeurbanne (FR); MICHELIS, André, F-69540 Grigny (FR); PILAZ, Pierre, F-69170 Saint Marcel l'Eclaire (FR); RAVIER, Christophe, F-69780 Saint Pierre de Chandieu (FR)
(74) Mandataire: Verriest, Philippe
(86) Numéro de dépôt international: PCT/FR2011/051684
(87) Numéro de publication internationale: WO 2012/022871

(56) Documents cités:
- EP-A1- 1 172 280
- FR-A1- 2 909 961

## Description

La présente invention concerne, d'une manière générale, les systèmes de direction assistée électriques des véhicules automobiles, systèmes dans lesquels un moteur électrique fournit un couple d'assistance pour faciliter les actions exercées par le conducteur sur le volant de conduite du véhicule concerné.

Plus particulièrement, cette invention s'intéresse à un procédé qui procure une sécurisation du couple d'assistance fourni par le moteur électrique d'assistance, en vérifiant que ce couple se situe dans une plage d'assistance donnée.

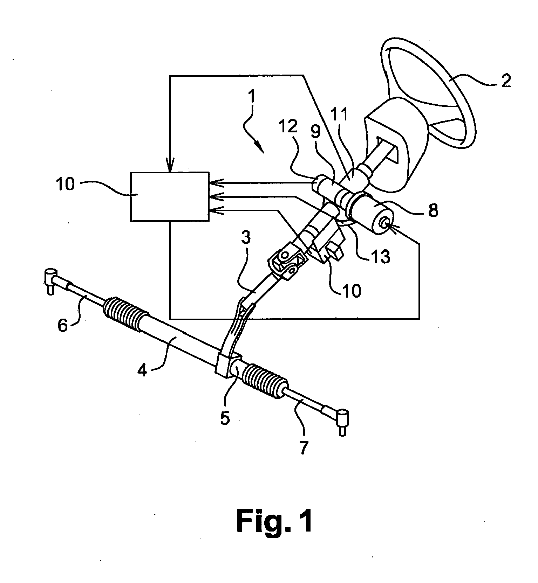

La figure 1 rappelle quels sont les principaux éléments composant un système de direction assistée électrique.

Une telle direction comprend, d'une part, une partie mécanique comprenant un volant de conduite 2 lié en rotation à une colonne de direction 3, dont l'extrémité éloignée du volant 2 porte un pignon de direction en prise avec une crémaillère 4, montée coulissante dans un carter de direction 5.

Les deux extrémités opposées de la crémaillère 4 sont respectivement liées, par l'intermédiaire de biellettes 6 et 7, aux roues directrices droite et gauche (non représentées) du véhicule automobile concerné.

La direction comprend, pour assister l'effort manuel exercé par le conducteur du véhicule sur le volant 2, un moteur électrique d'assistance 8 à deux sens de rotation, dont l'arbre de sortie est accouplé, par l'intermédiaire d'un réducteur de vitesse 9 notamment à vis sans fin et roue tangente, à la colonne de direction 3, de manière à transmettre un couple moteur (éventuellement aussi un couple résistant) à cette colonne de direction 3.

Le moteur électrique d'assistance 8 est piloté par un calculateur électronique embarqué 10, qui reçoit et traite divers signaux, en provenance de capteurs.

Dans une réalisation habituelle, le calculateur électronique 10 reçoit un signal électrique issu d'un capteur 11 de l'angle du volant 2, représentatif de l'angle instantané de braquage du véhicule automobile concerné, et ce calculateur 10 reçoit aussi un signal issu d'un capteur de couple 12 placé sur la colonne de direction 3, et mesurant ainsi le couple exercé par le conducteur sur le volant 2.

Dans l'exemple illustré, il est encore prévu un capteur 13 de la position instantanée du moteur électrique d'assistance 8.

A partir de ces diverses informations, et éventuellement de paramètres extérieurs à la direction, tels que la vitesse du véhicule, le calculateur électronique 10 pilote le moteur électrique d'assistance 8, en définissant à tout moment un couple ou un effort d'assistance, pouvant amplifier ou au contraire compenser l'effort appliqué par le conducteur sur le volant 2, selon des lois d'assistance ou des algorithmes prédéfinis.

L'essentiel de l'assistance est fourni sur la base de l'information issue du capteur de couple 12, et par l'intermédiaire d'algorithmes définissant un couple d'assistance « cible » pour le moteur électrique 8.

A titre d'exemples de cet état de la technique, il est fait référence aux documents de brevets WO 2006/045910 A1 et WO 2007/031619 A1 (au nom du demandeur). EP 1172280 A1 découle un procédé de sécurisation conformement au préambule de la revendication 1.

Dans les conditions actuelles, une direction assistée électrique (DAE) ainsi pilotée peut donner lieu à des phénomènes de sur-assistance, autrement dit une assistance excessive, risquant de conduire à un « auto-braquage », ou inversement de « sous-assistance », voire de « contre-assistance ».

La présente invention vise à éviter ces inconvénients, donc à éviter les situations non souhaitables de sur-assistance avec auto-braquage, et aussi de sous assistance d'un système de direction assistée électrique.

A cet effet, l'invention a essentiellement pour objet un procédé de sécurisation du couple d'assistance fourni par un moteur électrique d'assistance, dans un système de direction assistée électrique de véhicule automobile, le procédé de sécurisation consistant à estimer l'effort sur la crémaillère du système de direction, à partir du couple exercé par le conducteur sur le volant et du couple d'assistance, et éventuellement d'autres paramètres telle que la vitesse du moteur électrique d'assistance, comparer un couple d'assistance « cible » à une zone d'assistance autorisée, définie par rapport à l'effort crémaillère estimé à tout instant et, dans le cas où le couple d'assistance « cible » se maintient au-delà de limites prédéfinies de la zone d'assistance pendant une durée prédéfinie, à corriger et éventuellement interrompre l'assistance électrique de la direction.

En particulier, la présente invention prévoit une zone anormale autorisée de fonctionnement en « sur-assistance », pour laquelle le couple d'assistance « cible » est supérieur à un premier couple seuil d'assistance autorisé de la zone d'assistance donné, seuil d'assistance défini par rapport à l'effort crémaillère estimé, et une zone anormale autorisée de fonctionnement en « sous-assistance » pour laquelle le couple d'assistance « cible » est inférieur à un deuxième couple seuil d'assistance donné, seuil d'assistance défini par rapport à l'effort crémaillère estimé, une zone anormale de fonctionnement en « contre-assistance », la persistance du couple d'assistance « cible » dans ces zones pendant la durée prédéfinie provoquant une action correctrice sur l'assistance électrique de la direction.

En particulier, lorsque le couple d'assistance « cible » est supérieur au premier couple d'assistance donné, pendant une durée prédéfinie, ce qui indique une « sur-assistance », l'assistance fournie sera dans un premier temps limitée, puis éventuellement interrompue afin d'éviter un phénomène indésirable d'auto-braquage.

A l'inverse, lorsque le couple d'assistance « cible » est inférieur au deuxième couple d'assistance donné, pendant une durée prédéfinie, ce qui indique une « sous-assistance », l'assistance fournie sera augmentée, de manière à procurer une assistance minimale à caractère sécuritaire, limitant le phénomène de « sous-assistance ».

En particulier, lorsque le couple d'assistance « cible » se situe dans la zone anormale de fonctionnement en « contre-assistance », pendant une durée prédéfinie, l'assistance fournie sera diminuée, puis éventuellement interrompue.

En ce qui concerne la durée prédéfinie d'autorisation de fourniture d'assistance, notamment la zone autorisée de fonctionnement en « sur-assistance », celle-ci n'est pas nécessairement constante ; avantageusement, cette durée prédéfinie est variable, en particulier décroissante en fonction de la valeur de l'écart entre le couple d'assistance « cible » et le seuil d'assistance défini par rapport à l'effort crémaillère estimé.

L'invention sera mieux comprise à l'aide de la description qui suit, en référence au dessin schématique annexé illustrant, à titre d'exemple, un mode de mise en oeuvre de ce procédé de sécurisation du couple d'assistance.
La figure 1 (déjà mentionnée) est une vue en perspective, schématisée, d'une direction assistée électrique pouvant mettre en oeuvre le procédé de l'invention.
La figure 2 illustre l'algorithme utilisé pour l'estimation de l'effort crémaillère.
La figure 3 montre une comparaison de l'effort crémaillère mesuré et de l'effort crémaillère estimé en fonction de l'angle volant.
La figure 4 illustre des exemples de mise en oeuvre du procédé selon l'invention.
La figure 5 montre une courbe décrivant le temps de fonctionnement autorisé en sur-assistance.
La figure 6 montre les différentes zones mises en évidence par le procédé selon l'invention.

La première étape du procédé selon l'invention consiste à estimer l'effort appliqué sur la crémaillère du système de direction.

Pour cela, le couple volant 14 ramené à un effort crémaillère et mesuré par le capteur de couple 12 est ajouté au couple d'assistance 15 du moteur électrique 8 ramené à la crémaillère.

Cet effort crémaillère est ensuite filtré pour obtenir l'estimation 16 de l'effort crémaillère à un instant donné.

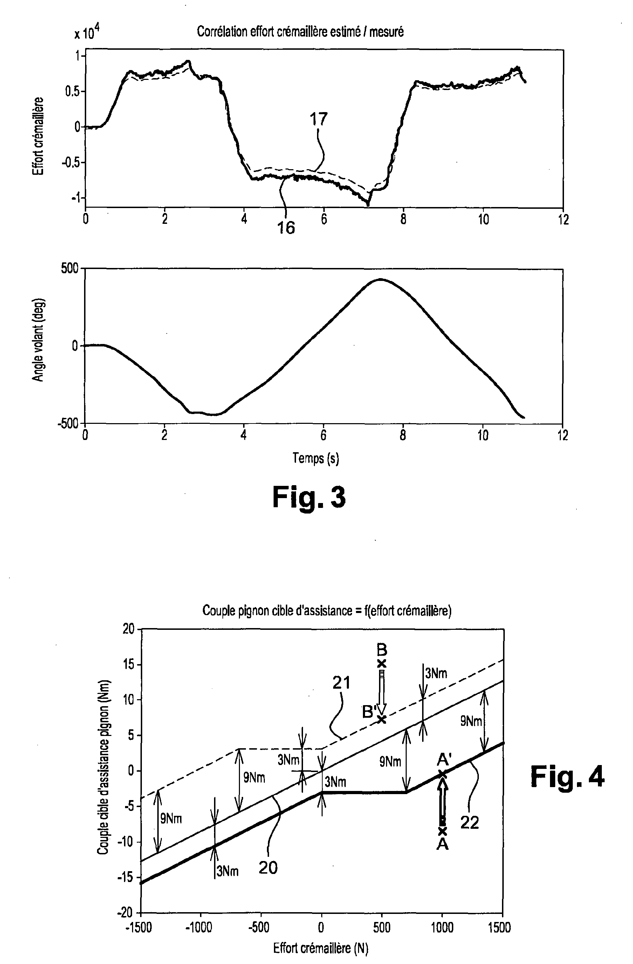

Comme illustré à la figure 3, cette estimation 16 est très proche de l'effort crémaillère effectivement mesuré 17 quelque soit la position angulaire du volant 2.

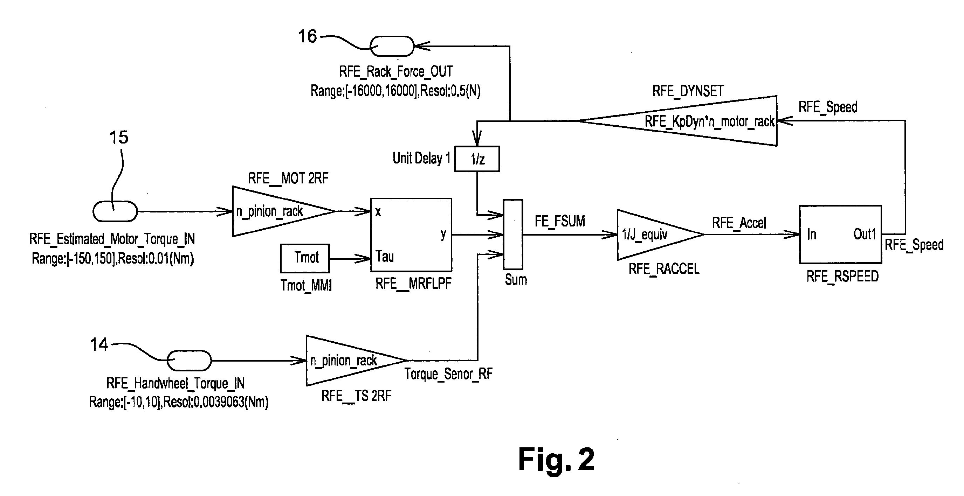

L'algorithme illustré à la figure 2 a pour but de définir les bornes minimales et maximales du couple cible d'assistance.

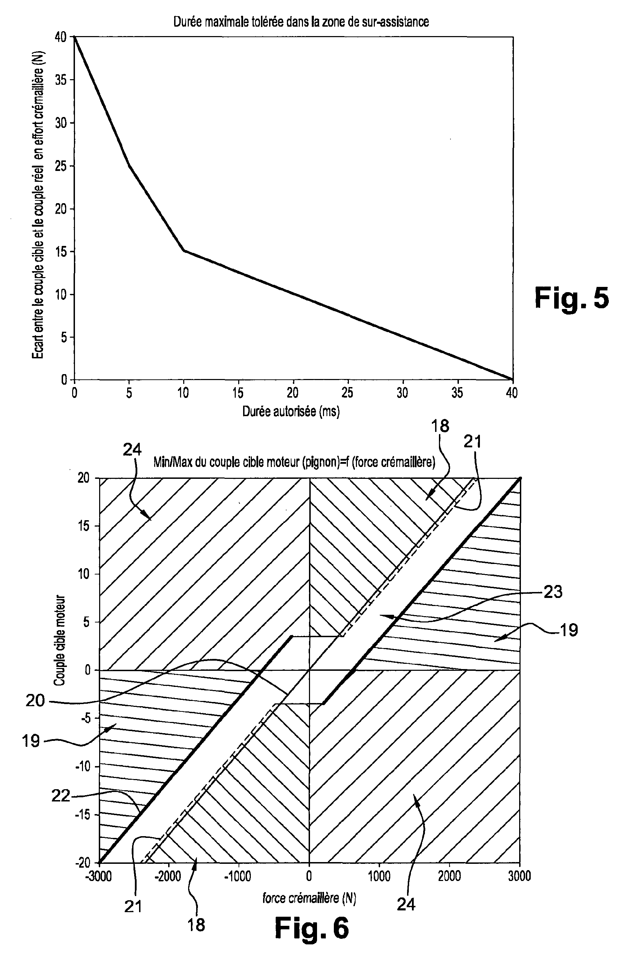

Pour ce faire, l'algorithme définit une première zone autorisée 18, visible à la figure 6, où le couple cible d'assistance est supérieur à l'effort crémaillère, définissant ainsi une zone autorisée de sur assistance, et une seconde zone autorisée 19, également visible à la figure 6, où le couple cible d'assistance (ordonnée du graphe de la figure 6) est inférieur à l'effort crémaillère, définissant ainsi une zone autorisée de sous assistance.

L'algorithme utilisé dans le procédé selon l'invention défini ainsi trois courbe visibles à la figure 4.

Une première courbe 20 défini le couple d'assistance en fonction de l'effort crémaillère. En d'autres termes, si le couple d'assistance réellement fourni par le système est sur cette courbe, ce dernier compensera exactement l'effort crémaillère.

Une deuxième courbe 21 pour les efforts crémaillère dans le sens angulaire positif du volant 2, est parallèle à la première courbe 20 mais décalée dans l'exemple présenté à la figure 4 de +3N.

Cette deuxième courbe 21 définie la limite haute d'une zone fonctionnelle 23 au-delà de laquelle l'effort cible d'assistance est supérieur à l'effort crémaillère.

Une troisième courbe 22 toujours pour les efforts crémaillère dans le sens angulaire positif du volant 2, est parallèle à la première courbe 20 mais décalée dans l'exemple présenté à la figure 4 de -3N à -9N.

Cette troisième courbe 22 définie la limite basse de la zone fonctionnelle 23 en dessous de laquelle l'effort cible d'assistance est inférieur à l'effort crémaillère.

La logique est la même pour un effort crémaillère dans le sens angulaire négatif du volant 2 (symétrie centrale des courbes).

Pour un effort crémaillère dans le sens positif du volant 2, lorsque le couple cible d'assistance est inférieur au minimum défini par la troisième courbe 22 (point A), l'assistance cible réellement appliquée sera augmentée de façon à fournir une assistance minimale sécuritaire (point A') limitant le phénomène de sous assistance.

Il en va de même lorsque le couple cible d'assistance est supérieur au maximum défini par la deuxième courbe 21 (point B), l'assistance cible réellement appliquée sera dans un premier temps limitée de façon à limiter la sur assistance (point B'), puis dans un deuxième temps coupée afin d'éviter un phénomène d'auto braquage.

Comme illustré à la figure 5, la durée avant coupure d'assistance est fonction de l'écart entre le couple cible d'assistance et le couple réellement appliqué.

Sur cette figure, la courbe est formée par trois segments de droites de pentes différentes.

Ainsi, pour un écart de couple compris entre 25N et 40N, la durée autorisée avant coupure de l'assistance sera inférieure à 5 ms. Pour des écarts de couple compris entre 15N et 25N, cette durée sera comprise entre 5 ms et 10 ms, et pour des écarts de couple compris entre 0N et 15N, cette durée sera comprise entre 10 ms et 40 ms.

La durée autorisée est proportionnel à l'écart de couple dans ces trois régions de la courbe.

Ainsi, plus l'écart de couple est grand et plus l'assistance est coupée rapidement, ce qui sécurise bien le couple d'assistance du moteur électrique 8.

La figure 6 réunie les différentes courbes et zones définies ci-dessus avec une courbe 21 limite de la zone fonctionnelle 23 située légèrement en-dessous pour les efforts crémaillère positifs, et légèrement au-dessus pour les efforts crémaillère négatifs, de la courbe 20 dans laquelle le couple d'assistance compense exactement l'effort crémaillère.

Dans ce cas, la limite haute du couple d'assistance 15 est rapidement atteinte, ce qui renvoie le contrôle du braquage des roues à la seule rotation du volant 2 par le conducteur.

Cette figure montre également des zones 24 où le couple d'assistance est résistant et vient s'opposer à la rotation du volant 2 qu'effectue le conducteur.

Une partie des courbes 22 définissant les limites de sous-assistance dans le sens positif et négatifs d'effort crémaillère dépassent dans ces zones 24, élargissant ainsi la zone fonctionnelle 23 à l'intérieur de ces zones 24.

Ainsi, pour les petits déplacements du volant 2, le moteur électrique d'assistance 8 va légèrement s'opposer à ce déplacement, ce qui permet de retenir le volant 2 pour un meilleur confort de conduite du conducteur.

Bien que l'invention ait été décrite en liaison avec des exemples particuliers de mise en oeuvre, il est bien évident qu'elle n'y est nullement limitée et qu'elle comprend tous les équivalents techniques des moyens décrits.

## Revendications

1. Procédé de sécurisation du couple d'assistance (15) fourni par un moteur électrique d'assistance (8), dans un système de direction assistée électrique de véhicule automobile, le procédé de sécurisation étant **caractérisé en ce qu'**il comprend les étapes consistant à :
- estimer l'effort sur la crémaillère du système de direction, à partir du couple exercé par le conducteur sur le volant (2) du couple d'assistance (15), et éventuellement d'autres paramètres telle que la vitesse du moteur électrique d'assistance
- comparer un couple d'assistance « cible » à une zone d'assistance autorisée, définie par rapport à l'effort crémaillère estimé (17) à tout instant, et
- dans le cas où le couple d'assistance « cible » se maintient au-delà de limites prédéfinies de la zone d'assistance pendant une durée prédéfinie, à corriger et éventuellement interrompre l'assistance électrique de la direction.

2. Procédé de sécurisation du couple d'assistance (15) selon la revendication 1 comprenant une zone anormale autorisée de fonctionnement en « sur-assistance » (18), pour laquelle le couple d'assistance « cible » est supérieur à un premier couple seuil d'assistance autorisé de la zone d'assistance donné (21), seuil d'assistance défini par rapport à l'effort crémaillère estimé (17), et une zone anormale de fonctionnement en « sous-assistance » (19) pour laquelle le couple d'assistance « cible » est inférieur à un deuxième couple seuil d'assistance donné (22), seuil d'assistance défini par rapport à l'effort crémaillère estimé (17), une zone anormale de fonctionnement en « contre-assistance » (24), la persistance du couple d'assistance « cible » dans ces zones pendant la durée prédéfinie provoquant une action correctrice sur l'assistance électrique de la direction.

3. Procédé de sécurisation du couple d'assistance (15) selon la revendication 2 dans lequel lorsque le couple d'assistance « cible » est supérieur au premier couple d'assistance donné (21), pendant une durée prédéfinie, ce qui indique une « sur-assistance », l'assistance fournie sera dans un premier temps limitée, puis éventuellement interrompue afin d'éviter un phénomène indésirable d'auto-braquage.

4. Procédé de sécurisation du couple d'assistance (15) selon l'une des revendications 2 à 3 dans lequel lorsque le couple d'assistance « cible » est inférieur au deuxième couple d'assistance donné (22), pendant une durée prédéfinie, ce qui indique une « sous-assistance », l'assistance fournie sera augmentée, de manière à procurer une assistance minimale à caractère sécuritaire, limitant le phénomène de « sous-assistance ».

5. Procédé de sécurisation du couple d'assistance (15) selon l'une des revendications 2 à 4 dans lequel lorsque le couple d'assistance « cible » se situe dans la zone anormale de fonctionnement en « contre-assistance » (24), pendant une durée prédéfinie, l'assistance fournie sera diminuée, puis éventuellement interrompue.

6. Procédé de sécurisation du couple d'assistance (15) selon l'une des revendications 1 à 5 dans lequel la durée prédéfinie est variable, en particulier décroissante en fonction de la valeur de l'écart entre le couple d'assistance « cible » et le seuil d'assistance défini par rapport à l'effort crémaillère estimé (17).

## Patentansprüche

1. Verfahren zur Sicherung des Servodrehmoments (15), das von einem Servoelektromotor (8) in einer elektrischen Kraftfahrzeug-Servolenkanlage bereitgestellt wird, wobei das Sicherungsverfahren **dadurch gekennzeichnet ist, dass** es folgende Schritte umfasst:
- Schätzen der Belastung der Zahnstange der Lenkanlage, aus dem Drehmoment, das durch den Fahrer auf das Lenkrad (2) ausgeübt wird, aus dem Servodrehmoment (15) und gegebenenfalls aus anderen Parametern, wie etwa der Drehzahl des Servoelektromotors,
- Vergleichen eines "angestrebten" Servodrehmoments mit einem zugelassenen Servobereich, der jederzeit mit Bezug auf die geschätzte Zahnstangenbelastung (17) definiert wird, und
- für den Fall, dass das "angestrebte" Servodrehmoment für eine vordefinierte Dauer oberhalb von vordefinierten Grenzen des Servobereichs bleibt, Korrigieren und gegebenenfalls Unterbrechen der elektrischen Servolenkung.

2. Verfahren zur Sicherung des Servodrehmoments (15) nach Anspruch 1, umfassend einen zugelassenen anormalen "Überservo-" Betriebsbereich (18), für den das "angestrebte" Servodrehmoment größer als ein erstes zugelassenes Servoschwellenwert-Drehmoment des gegebenen Servobereichs (21) ist, wobei der Servoschwellenwert mit Bezug auf die geschätzte Zahnstangenbelastung (17) definiert ist, und einen zugelassenen anormalen "Unterservo-" Betriebsbereich (19), für den das "angestrebte" Servodrehmoment kleiner als ein zweites gegebenes Servoschwellenwert-Drehmoment (22) ist, wobei der Servoschwellenwert mit Bezug auf die geschätzte Zahnstangenbelastung (17) definiert ist, einen anormalen "Gegenservo-" Betriebsbereich (24), wobei das Verbleiben des "angestrebten" Servodrehmoments in diesen Bereichen während der vordefinierten Dauer eine Korrekturmaßnahme an der elektrischen Servolenkung bewirkt.

3. Verfahren zur Sicherung des Servodrehmoments (15) nach Anspruch 2, wobei, wenn das "angestrebte" Servodrehmoment während einer vordefinierten Dauer größer als das erste gegebene Servodrehmoment (21) ist, was einen "Überservo-" Betrieb angibt, die bereitgestellte Unterstützung zunächst begrenzt wird und dann eventuell unterbrochen wird, um ein unerwünschtes Phänomen des Selbsteinlenkens zu vermeiden.

4. Verfahren zur Sicherung des Servodrehmoments (15) nach einem der Ansprüche 2 bis 3, wobei, wenn das "angestrebte" Servodrehmoment während einer vordefinierten Dauer kleiner als das zweite gegebene Servodrehmoment (22) ist, was einen "Unterservo-" Betrieb angibt, die bereitgestellte Unterstützung verstärkt wird, um eine sicherheitstechnische Mindestunterstützung zu verleihen, die das "Unterservo-" Phänomen einschränkt.

5. Verfahren zur Sicherung des Servodrehmoments (15) nach einem der Ansprüche 2 bis 4, wobei, wenn das "angestrebte" Servodrehmoment während einer vordefinierten Dauer in dem anormalen "Gegenservo-" Betriebsbereich (24) liegt, die bereitgestellte Unterstützung verringert wird und dann eventuell unterbrochen wird.

6. Verfahren zur Sicherung des Servodrehmoments (15) nach einem der Ansprüche 1 bis 5, wobei die vordefinierte Dauer variabel ist, insbesondere in Abhängigkeit von dem Abweichungswert zwischen dem "angestrebten" Servodrehmoment und dem Servoschwellenwert, der mit Bezug auf die geschätzte Belastung der Zahnstange (17) definiert wird, abnehmend ist.

## Claims

1. A method for securing the assistance torque (15) provided by an electric power-assistance motor (8), in an electric power steering system of an automotive vehicle, the securing method being **characterized in that** it comprises the steps which consist of:
- estimating the effort on the rack of the steering system, from the torque exerted by the driver on the steering wheel (2) of the assistance torque (15), and possibly other parameters such as the speed of the electric power-assistance motor.
- comparing a "target" assistance torque to an authorized assistance area, defined relative to the estimated effort rack (17) at any moment, and
- in the case where the "target" assistance torque is kept beyond preset limits of the assistance area for a preset period, correcting and possibly interrupting the electric power steering.

2. The method for securing the assistance torque (15) according to claim 1 comprising an authorized abnormal area of operating in "over-assistance" (18), for which the "target" assistance torque is greater than a first authorized assistance threshold torque of the given assistance area (21), assistance threshold defined relative to the estimated effort rack (17), and an abnormal area of operating in "under-assistance" (19) for which the "target" assistance torque is lower than a second given assistance threshold torque (22), assistance threshold defined relative to the estimated effort rack (17), an abnormal area of operating in "counter-assistance" (24), the persistence of the "target" assistance torque in these areas during the preset period causing a corrective action on the electric power steering.

3. The method for securing the assistance torque (15) according to claim 2 wherein when the "target" assistance torque is greater than the first given assistance torque (21), for a preset period, which indicates an "over-assistance", the provided assistance will be initially limited, and then optionally interrupted in order to avoid an undesirable phenomenon of self-steering.

4. The method for securing the assistance torque (15) according to any of claims 2 to 3 wherein when the "target" assistance torque is lower than the second given assistance torque (22), for a preset period, which indicates an "under-assistance", the provided assistance will be increased, so as to provide minimal assistance of a security nature, limiting the "under-assistance" phenomenon.

5. The method for securing the assistance torque (15) according to any of claims 2 to 4 wherein when the "target" assistance torque is located in the abnormal area of operating in "counter-assistance" (24), for a preset period, the provided assistance will be decreased, then optionally interrupted.

6. The method for securing the assistance torque (15) according to any of claims 1 to 5 wherein the preset period is variable, in particular decreasing according to the value of the gap between the "target" assistance torque and the assistance threshold defined relative to the estimated effort rack (17).
